# EUROPEAN PATENT APPLICATION

(11) **EP 1 707 479 A2**
(43) Date of publication of application: **04.10.2006**
(21) Application number: 06110825.4
(22) Date of filing: 08.03.2006
(51) Int. Cl.: B62J 17/06

(54) **Leg-protective sheet**

(30) Priority: 01.04.2005 IT MI20050107 U
(71) Applicant: PIAGGIO & C. S.p.A., 56025 Pontedera (Pisa) (IT)
(72) Inventor: Marcacci, Maurizio, 57128 Livorno (IT)
(74) Representative: Coppo, Alessandro

(57) **Abstract**

The invention relates to a leg-protective sheet and in particular a leg-protective sheet for two-wheel vehicles (30) provided with bodywork (31). The leg-protective sheet (10) is made in trapezoidal shape and has a first base edge (12) foreseen to be in contact with the user, a second base edge (14) to be connected to the two-wheel vehicle and two sloped edges (13) of connection between the two base edges (12, 14), the second base edge (14) equipped with first magnetic-type attachment means to the front portion of the vehicle (30) bodywork (31).

## Description

The present invention refers to a leg-protective sheet for two-wheel vehicles.

In particular, the invention refers to a leg-protective sheet for protecting the driver from rain and wind, for two-wheel vehicles with bodywork such as a scooter, equipped with easy-to-fasten connection means to the scooter which permit its optimal integration with the vehicle.

In the last few years, a considerable increase has been observed in the number of two-wheel vehicles circulating, in particular with bodywork such as scooters which offer a certain protection to the user, permitting him to drive the vehicle while wearing normal clothes, without needing to wear specific sporting clothes.

It is therefore advantageous to equip the vehicle with protections, which in the case of adverse weather prevent the user from ruining his clothes and make the course of travel more comfortable.

Among the devices presently in use, leg-protective sheets have been lately proposed that are fixed to the vehicle, usually by means of tying with laces or belts, which leads to a series of disadvantages including a certain imprecision in the application on the vehicle, the noise during the running of the vehicle, the reduction of the vehicle's aerodynamic properties, and not least, affecting the commercial success of the device, there is a scarce appeal for a cover equipped with such laces and belts.

Object of the present invention is that of resolving the aforesaid drawbacks of the prior art by providing a leg-protective sheet equipped with easy-to-fasten connection means which permit its optimal integration with a two-wheel vehicle equipped with bodywork.

Another object of the present invention is that of providing a leg-protective sheet which may be applied and removed in a few seconds, without any modification or strain for the user.

A further object of the present invention is that of providing a leg-protective sheet which in case of a fall is released from the vehicle, remaining solidly connected with the driver in order to offer him protection against the ground.

These and other objects according to the present invention are achieved by the leg-protective sheet for two-wheel vehicles according to claim 1.

Further characteristics of the invention form part of the dependent claims.

The structural and functional characteristics and the advantages of the leg-protective sheet for two-wheel vehicles according to the present invention shall be more evident from the following exemplifying and not limiting description, referred to the attached schematic drawings in which:
Figure 1 is an elevation view of a two-wheel vehicle equipped with bodywork bearing a leg-protective sheet according to the present invention; and
Figure 2 is a view of the leg-protective sheet according to the invention, in outstretched position.

With reference to the abovementioned figures, a leg-protective sheet 10 is shown equipped with at least one first base edge 12 foreseen to be in contact with the user's abdomen, with at least one second base edge 14 to be connected to a two-wheel vehicle 30 and with at least two edges 13, preferably sloped, of connection between the at least two base edges 12, 14. Preferably, the sheet 10 has a trapezoidal shape, but it can be made in almost any shape without departing from the protective scope of the present invention.

The base edge 12 is equipped with at least two first magnetic-type attachment means 18 adapted to associate it with part of the scooter bodywork.

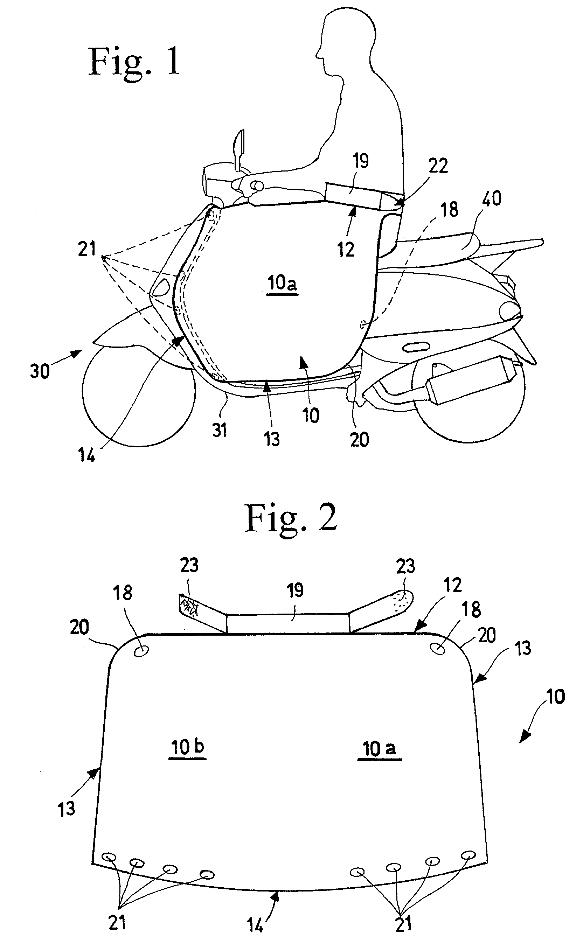

Preferably, the base edge 14 is shaped so to stick perfectly on the profile of the front portion of the vehicle bodywork, as shown in figure 1, and is equipped with eight magnetic attachment means 21.

The first base edge 12 may be made with rectilinear profile or may have a shaped profile.

The first edge 12 has an extendible band 19 adapted to be fastened around the scooter driver's bust by means of adjustable locking means 22, such as for example Velcro strips 23, adapted to be easily closed or opened around the abdomen of the user in case of emergency.

In order to better stick to the user's abdomen, an elastic element (not directly shown) may be inserted in the first base edge 12.

The leg-protective sheet 10 is made in a single piece, but may be made in two symmetrical pieces 10a, 10b without departing from the protective scope of the present invention. Possibly, such right 10a and left 10b parts may be united for example by means of Velcro, which extends in central position between the two base edges 12, 14.

To fulfil its protective role, the leg-protective sheet 10 has its externally-directed surface in tough, waterproof material, or else it may be made in several overlapping layers of which at least one is in waterproof material and at least one in tough material.

The fixing of the sheet 10 to the vehicle in the area of the first base edge 12 is carried out by means of the mentioned magnetic-type attachment means 18.

Such magnetic-type attachment means 18 are made from two magnets arranged in proximity with each vertex 20 of the cover 10, between the first base edge 12 and one of the two sloped edges 13.

Such attachment means 18 are adapted to be coupled with the vehicle bodywork beneath a saddle 40, so to avoid the lateral fluttering of the sheet 10.

These magnetic attachment means 18 have a lower seal with respect to magnetic means 21 foreseen on the second base edge 14, and allow the driver easy leg movement, for resting on the ground during stops as well as for mounting and dismounting the vehicle.

The leg-protective sheet 10 according to the present invention is particularly adapted to be attached to vehicles equipped with metallic bodywork, but may be adapted to vehicles lacking metallic bodywork, for example those with tubular frame and plastic bodywork, motorcycles, and three-wheel and four-wheel vehicles.

In this case, in fact, even if not equipped with metallic bodywork, ferrous plates (of small size but adequate thickness) sufficient for the correct function of the magnets are attached to the vehicle at the magnetic-type attachment means 18 and 21.

According to an alternative embodiment, not shown, the leg-protective sheet 10 according to the invention may be integrated with heating elements, connected to a thermostat, for heating the driver.

The magnetic-type attachment means 21, 18 are made from magnets, but could be made from electromagnets which are operated only with the vehicle starting, without departing from the protective scope of the present invention.

From the above description, the characteristics of the leg-protective sheet, object of the present invention, are evident, as are the relative advantages, which include:
- simple and reliable use;
- quick release from the vehicle, particularly in case of a fall;
- protective effect for the driver in case of a fall;
- limited costs.
Finally, it is clear that the leg-protective sheet as conceived is susceptible to numerous modifications and variations, all falling within the invention; moreover, all details may be substituted with technically equivalent elements. In practice, any material of any size may be used according to the technical needs.

## Claims

1. Leg-protective sheet (10) for vehicles (30) provided with bodywork (31), said leg-protective sheet (10) comprising at least one first base edge (12) foreseen to be in contact with the user, at least one second base edge (14) to be connected to the vehicle (30) and at least two sloped edges (13) of connection between said at least two base edges (12, 14), **characterised in that** said second base edge (14) comprises magnetic-type attachment means (21) adapted to fasten said sheet (10) to said vehicle at the front portion of the bodywork (31) .

2. Leg-protective sheet (10) according to claim 1, **characterised in that** it is made in trapezoidal shape.

3. Leg-protective sheet (10) according to claim 1, **characterised in that** said second base edge (14) has a shaped profile so that it may be adapted to the shape of the vehicle bodywork.

4. Leg-protective sheet according to claim 1, **characterised in that** it moreover comprises second magnetic-type attachment means (18) made along the first base edge (12).

5. Leg-protective sheet according to claim 3, **characterised in that** said second magnetic-type fixing means (18) comprise two magnets, each arranged in proximity with a vertex (20) between the first base edge (12) and one of the two sloped edges (13) in order to laterally fasten the leg-protective sheet (10) in correspondence with the saddle (40), with which the vehicle is equipped.

6. Leg-protective sheet according to claim 3, **characterised in that** said first edge (12) has an extendible band (19) adapted to be fastened around the vehicle driver's bust by means of adjustable locking means (22).

7. Leg-protective sheet according to claim 3, **characterised in that** said adjustable locking means (22) comprise Velcro strips (23), adapted to be easily closed or opened around the abdomen of the user.

8. Leg-protective sheet according to claim 1, **characterised in that** said sheet is equipped along the first base edge (12) with elastic elements.

9. Leg-protective sheet according to claim 1, **characterised in that** it is made in two symmetrical parts (10a, 10b), united by means of a Velcro strip extending in central position between the two base edges (12, 14).

10. Leg-protective sheet according to claim 1, **characterised in that** it is made in waterproof and tough material.

11. Leg-protective sheet according to claim 9, **characterised in that** it is made in one or more overlapping layers, of which at least one is in waterproof material and at least one in tough material.
